**Europäisches Patentamt**

**European Patent Office**

**Office européen des brevets**

(19)

(11) Veröffentlichungsnummer: **0 171 465**
**B1**

(12) # EUROPÄISCHE PATENTSCHRIFT

(45) Veröffentlichungstag der Patentschrift:
**13.07.88**

(51) Int. Cl.⁴: **G 11 B 7/24**

(21) Anmeldenummer: **84115423.0**

(22) Anmeldetag: **14.12.84**

(54) **Optisch auslesbarer plattenförmiger Informationsträger hoher Speicherdichte.**

(30) Priorität: **11.07.84 DE 3425578**

(43) Veröffentlichungstag der Anmeldung:
**19.02.86 Patentblatt 86/8**

(45) Bekanntmachung des Hinweises auf die Patenterteilung:
**13.07.88 Patentblatt 88/28**

(84) Benannte Vertragsstaaten:
**AT BE CH DE FR GB IT LI LU NL SE**

(56) Entgegenhaltungen:
**EP - A - 0 064 777**

(73) Patentinhaber: **POLYGRAM GmbH,**
**Glockengiesserwall 3, D-2000 Hamburg 1 (DE)**

(72) Erfinder: **Langowski, Horst-C.,Dipl.-Phys.,**
**Kniestrasse 30, D-3000 Hannover 1 (DE)**
Erfinder: **Schmitz, Klaus, Dipl.-Phys., Ebelingstrasse 51,**
**D-3000 Hannover 51 (DE)**

(74) Vertreter: **Meier, Friedrich, Dipl.-Ing. et al, Philips**
**Patentverwaltung GmbH**
**Wendenstrasse 35 Postfach 10 51 49,**
**D-2000 Hamburg 1 (DE)**

# Beschreibung

## Technisches Gebiet

Die Erfindung bezieht sich auf einen optisch auslesbaren plattenförmigen Informationsträger hoher Speicherdichte, beispielsweise eine digitale Audioplatte (CD) oder eine Videoplatte (VLP), bei der die die Information enthaltende Mikrostruktur aus spiral- oder kreisringförmigen Pit- bzw. Lochspuren wenigstens auf einer Seite einer Grundplatte aus thermo- oder duroplastischem Werkstoff vorgesehen ist, bei der ferner auf die die Mikrostruktur tragende Seite der Platte wenigstens im Bereich der Mikrostrukturteilfläche eine Reflexionsschicht aus einem geeigneten Metall bzw. einer geeigneten Metallegierung aufgebracht ist und bei der diese Schicht wiederum mit einer Schutzschicht abgedeckt ist.

## Zugrunde liegender Stand der Technik

Bei der Herstellung solcher plattenförmigen Informationsträger wird beispielsweise zunächst im Spritzpressverfahren eine Grundpaltte (ein Rohling) hergestellt, dessen Informationsstrukturseite anschliessend in einer Sputteranlage mit der gewünschten Reflexionsschicht versehen wird. Zum Schutz der die Informationsstruktur tragenden Seite wie auch zum Schutz der hier aufgebrachten Reflexionsschicht wird über der Reflexionsschicht dann noch eine Schutzschicht in Form eines Schutzlacks aufgebracht. An die Reflexionsschicht selbst müssen hohe Anforderungen an eine einwandfreie Haftung, ausreichend hohe Reflexionseigenschaften für den die Informationen auslesenden Laserstrahl sowie an die Konstanz dieser Eigenschaften über der Zeit gestellt werden.

Durch die EP-A-0 064 777 und EP-A-0 086 009 ist es bereits bekannt, anstelle von Reinmetallen wie Silber und Aluminium zur Herstellung der Reflexionsschicht auch Metalllegierungen zu verwenden, die die zu fordernden genannten Eigenschaften erfüllen.

## Offenbarung der Erfindung

Der Erfindung liegt die Aufgabe zugrunde, weitere Metallegierungen für die Herstellung einer Reflexionsschicht bei einer solchen optischen Informationsspeicherplatte anzugeben, die bei guter Haftung, hohen Reflexionseigenschaften und ausreichender Langzeitkonstanz keine hohen Anforderungen an die Reinheit der für die Legierung verwendeten Metallkomponenten stellen und sich daher in besonderer Weise für eine kostengünstige Massenherstellung eignen.

Ausgehend von einer optisch auslesbaren Informationsspeicherplatte der einleitend beschriebenen Art wird diese Aufgabe gemäss der Erfindung dadurch gelöst dass die Reflexionsschicht aus einer Metallegierung aus einer Gruppe von Metallegierungen besteht, die eine Cu-Cr-Legierung mit 0,3–1,5 Gew.-% Chrom, eine Al-Mg-Si-Legierung mit jeweils 0,5– 1,5 Gew.-% Magnesium und Silizium und eine Mg-Mn-Si-Legierung mit 1,2–2 Gew.-% Mangan und 0,05–0,1 Gew.-% Silizium aufweist.

Die angegebenen Metallegierungen erweisen sich in ihrer Anwendung als Reflexionsschichten ausserordentlich stabil und korrosionsbeständig und erfordern auch hinsichtlich der verwendeten Metallkomponenten keine Metalle höchster Reinheit. Weiterhin erweisen sich diese Metallegierungen auch besonders geeignet für ihren Einsatz in Sputteranlagen, da sie eine gute Ausbeute ergeben und sich hiermit optisch dichte Schichten niedriger Schichtdicke erzeugen lassen. Besonders günstig erweist sich in diesem Zusammenhang die erwähnte Mg-Mn-Si-Legierung mit 1,2–2 Gew.-% Mangan und 0,05–0,1 Gew.-% Silizium, die eine besonders hohe Ausbeute, d.h. die Anzahl der gesputterten Magnesium-Atome pro auf die Kathode auftreffende Argon-Ionen, zulässt. Die ansonsten erforderlichen Sputterzeiten lassen sich hierdurch bei gleicher Leistungsdichte erheblich reduzieren.

## Kurze Beschreibung der Zeichnung

Zur Veranschaulichung der bei optisch auslesbaren plattenförmigen Informationsträgern zur Anwendung kommenden Reflexionsschichten nach der Erfindung sind in der Zeichnung verschiedene Ausführungsformen solcher Informationsspeicherplatten angegeben. In der Zeichnung bedeuten

Fig. 1 ein optisch auslesbarer plattenförmiger Informationsträger im Ausschnitt,

Fig. 2 eine Variante des optisch auslesbaren plattenförmigen Informationsträgers nach Fig. 1 im Ausschnitt,

Fig. 3 ein weiterer optisch auslesbarer plattenförmiger Informationsträger in Sandwichbauweise im Ausschnitt.

## Bester Weg zur Ausführung der Erfindung

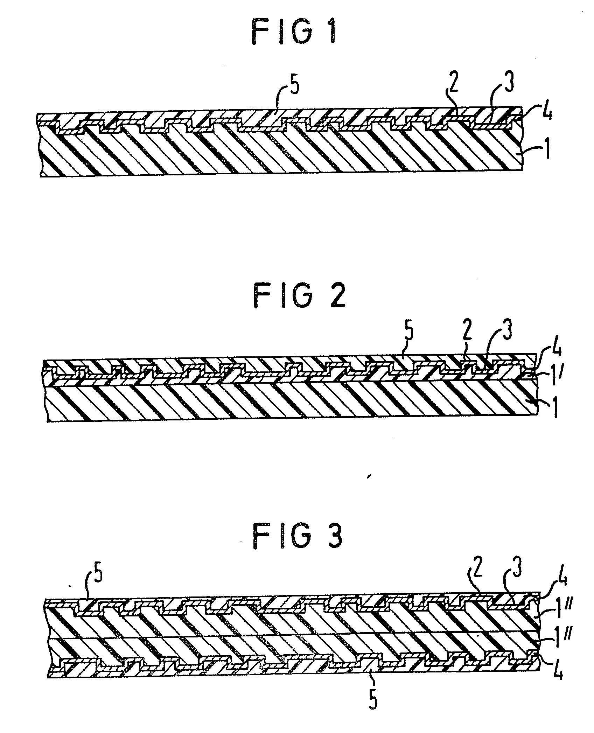

Der plattenförmige Informationsträger nach Fig. 1 besteht aus der eigentlichen Grundplatte 1 aus einem thermoplastischen bzw. duroplastischen Werkstoff, in den auf einer Seite, und zwar auf der Oberseite die aus alternativen Erhöhungen 2 und Vertiefungen 3 bestehende Informationsstruktur eingeprägt ist. Diese Informationsstruktur wird mit einer Reflexionsschicht 4 versehen, die aus einer der genannten Metallegierungen besteht und vorzugsweise durch Sputtern so aufgebracht ist, dass eine dünne optisch dichte Schicht entsteht. Die Reflexionsschicht 4 ihrerseits ist nach oben wiederum mit einer Schutzlackschicht 5 abgedeckt.

Bei der Variante des plattenförmigen Informationsträgers nach Fig. 1 in Fig. 2 ist die Grundplatte 1 an der Oberseite mit einer dünnen Substratplatte 1' verklebt, die ihrerseits die Informationsstruktur mit den Erhöhungen 2 und Vertiefungen 3 aufweist und entsprechend der Ausführungsform nach Fig. 1 Träger der metallischen Reflexionsschicht 4 und der darüber angeordneten Schutzlackschicht 5 ist. Diese Ausführungsform entsteht dadurch, dass anstelle eines Spritzpressvorgangs der Grundplatte mit der Informationsstruktur zunächst das Substrat 1' mit der Informationsstruktur in einer Matrizenform hergestellt wird, die mit einem aushärtbaren Kunststofflack angefüllt wird und nach seinem Aushärten das Substrat 1' ergibt. Dieses Substrat 1' kann bei der Herstellung bereits mit der Grundplatte 1 verklebt werden.

Der optisch auslesbare plattenförmige Informationsträger nach Fig. 3 weist auf beiden Seiten eine Informationsstruktur auf und besteht praktisch aus zwei jeweils mit ihren Unterseiten verklebten plattenförmigen Informationsträgern nach Fig. 1. Die Grundteilplatten sind in Fig. 3 mit 1'' bezeichnet.

Selbstverständlich ist es auch möglich, einen plattenförmigen Informationsträger, der auf beiden Seiten eine Informationsstruktur aufweist, in der Weise herzustellen, dass beim Spritzpressen des Plattenrohlings Informationsstruktur auf beiden Seiten in die Plattenoberfläche eingeprägt wird. In diesem Fall wird dann der Informationsträger auf beiden Seiten mit einer Reflexionsschicht und einer darüber anzuordnenden Schutzschicht versehen

Gewerbliche Verwertbarkeit

Plattenförmige Informationsträger hoher Speicherdichte, die zum optischen Auslesen mittels eines Laserstrahls in Reflexion auf seiten der Informationsmikrostruktur eine geeignete Reflexionsschicht aufweisen müssen, sind für alle Arten von zu speichernden Informationen, insbesondere für Bild- Ton- und Dateninformationen geeignet. Sie finden eine grosse Anwendung zur beliebigen Wiedergabe ihres Speicherinhaltes in Abspielgeräten der Unterhaltungsindustrie und kommerziellen Datenbanken Anwendung.

## Patentanspruch

Optisch auslesbarer plattenförmiger Informationsträger hoher Speicherdichte, beispielsweise digitale Audioplatte (CD) und Videoplatte (VLP), bei der die die Information enthaltende Mikrostruktur aus spiral- oder kreisringförmigen Pit- bzw. Lochspuren wenigstens auf einer Seite einer Grundplatte (1, 1', 1'') aus thermo- oder duroplastischem Werkstoff vorgesehen ist, bei der ferner auf die die Mikrostruktur tragende Seite der Platte, wenigstens im Bereich der Mikrostrukturteilfläche, eine Reflektionsschicht (4) aus einem geeigneten Metall- bzw. einer geeigneten Metalllegierung aufgebracht ist und bei der diese Schicht wiederum mit einer Schutzschicht (5) abgedeckt ist, dadurch gekennzeichnet, dass die Reflexionsschicht (4) aus einer Metallegierung aus einer Gruppe von Metallegierungen besteht, die eine Cu-Cr-Legierung mit 0,3–1,5 Gew.-%

Chrom, eine Al-Mg-Si-Legierung mit jeweils 0,5–1,5 Gew.-% Magnesium und Silizium und eine Mg-Mn-Si-Legierung mit 1,2–2 Gew-% Mangan und 0,05 –0,1 Gew.-% Silizium umfasst.

## Revendication

Porteur d'information en forme de disque lisible par voie optique à haute densité de stockage, par exemple un disque audio numérique (CD) et un disque vidéo numérique (VLP), dans lequel la microstructure contenant l'information constituée par des pistes de puits respectivement de trous spiralées ou en forme de cercle est prévue au moins sur une face d'une plaque de base (1, 1', 1'') en matière synthétique thermoplastique ou thermodurcissante, dans lequel une couche réflectrice 4 constituée par un métal approprié respectivement un alliage métallique approprié est appliquée en outre sur la face porteuse de la microstructure de la plaque, au moins à proximité de la face partielle de la microstructure et dans lequel cette couche est recouverte à son tour d'une couche protectrice (5), caractérisé en ce que la couche réflectrice (4) est constituée par un alliage métallique d'un groupe d'alliages métalliques comprenant un alliage de Cu-Cr contenant 0,3 à 1,5% en poids de chrome, un alliage de Al-Mg-Si contenant chaque fois 0,5 à 1,5% en poids de magnésium et de silicium et un alliage de Mg-Mn-Si contenant 1,2 à 2% en poids de manganèse et 0,05 à 0,1% en poids de silicium.

## Claim

An optically readable, high storage density information carrier in the form of a disc, for example, a digital audio disc (CD) and a video disc (VLP), in which the microstructure which contains the information and which consists of spiral or annular tracks of pits or holes is provided on at least one side of a base (1, 1', 1'') consisting of a thermoplastic or duroplastic material, and in which a reflective layer (4) of a suitable metal or metal alloy is applied to the side of the base carrying the microstructure in at least that portion in which the microstructure exists, and in which the reflective layer is itself covered with a protective layer (5), characterized in that the reflective layer (4) consists of a metal alloy from a group of metal alloys, comprising a Cu-Cr alloy containing from 0,3–1,5% by weight of chromium, an Al-Mg-Si alloy containing from 0,5–1,5% by weight each of magnesium and silicon, and an Mg-Mn-Si alloy containing from 1,2– 2% by weight of manganese and from 0,05–0,1% by weight of silicon.

# FIG 1

# FIG 2

# FIG 3